# FASCICULE DE BREVET EUROPEEN

(11) **EP 0 992 275 B1**
(45) Date de publication et mention de la délivrance du brevet: **24.11.2004**
(21) Numéro de dépôt: 99402301.8
(22) Date de dépôt: 21.09.1999
(51) Int. Cl.: B01D 53/04, B01D 53/047

(54) **Procede et installation de production d'un debit gazeux variable**
Verfahren und Einrichtung zur Herstellung von variablen Gasmengen
Process and installation for the production of variable quantities of a gas

(30) Priorité: 09.10.1998 FR 9812695
(43) Date de publication de la demande: 12.04.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Barry, Lionel, 94220 Charenton le Pont (FR); Vigor, Xavier L'AIR LIQUIDE-DSPI, 75321 Paris Cedex 07 (FR)
(74) Mandataire: Le Moenner, Gabriel

(56) Documents cités:
- EP-A- 0 821 992
- US-A- 5 730 778
- PATENT ABSTRACTS OF JAPAN vol. 017, no. 413 (C-1092), 3 août 1993 (1993-08-03) & JP 05 084418 A (HITACHI LTD;OTHERS: 01), 6 avril 1993 (1993-04-06)

## Description

La présente invention est relative à un procédé de séparation d'un gaz d'alimentation comprimé, notamment d'air comprimé, en vue de fournir à un utilisateur un débit variable d'un gaz produit, notamment d'azote, au moyen d'un appareil de séparation à capacité variable alimenté par un appareil de compression.

L'invention s'applique notamment à la production d'azote à partir d'air atmosphérique par distillation ou par perméation.

L'utilisation d'appareils de séparation d'air à débit variable tend à se répandre, en raison des avantages de standardisation qu'ils apportent: les frais d'étude sont amortis sur plus d'appareils, le groupement des approvisionnements permet de réduire leur coût, l'effet de série diminue le prix de revient unitaire des appareils, on peut stocker des appareils pour réduire le délai de fourniture aux clients car on sait qu'ils peuvent répondre à une large gamme de demandes, les opérations de maintenance sont simplifiées et le stock de pièces détachées réduit, etc.

Cependant, les appareils de séparation à débit variable posent des problèmes d'adaptation de l'appareil lui-même et de son compresseur d'alimentation à des conditions de fonctionnement variables, afin de maintenir autant que possible les performances de séparation et la dépense d'énergie spécifique.

Ainsi, il est connu de réguler les petits appareils de distillation d'air en tout ou rien: ils s'arrêtent lorsque la pression d'azote dans le réseau utilisateur augmente jusqu'à un seuil haut prédéterminé, et redémarrent lorsque cette pression redescend jusqu'à un seuil bas prédéterminé.

L'inconvénient de cette méthode est que l'appareil de distillation met beaucoup de temps à redémarrer et, pendant toute la durée du redémarrage, son compresseur consomme son énergie nominale avec une production d'azote

nulle. Si l'on veut réduire le nombre de cycles arrêt/redémarrage, on doit installer une capacité-tampon de volume important.

Il est également connu de mettre à l'air le débit d'azote excédentaire. L'énergie spécifique est alors, bien entendu, augmentée d'autant.

Les documents US-A-5 730 778 et EP-A-0 821 992 décrivent des installations avec un compresseur unique à vitesse varaible et le document JP-A-05.084418 décrit une installation avec deux compresseurs à débits variables en parallèle.

L'invention a pour but de permettre un fonctionnement satisfaisant des appareils de séparation de gaz avec une plage relativement importante de variation du débit produit par rapport au débit nominal.

A cet effet, l'invention propose un procédé dans lequel :
- on ne comprime qu'une partie du débit de gaz d'alimentation au moyen d'au moins un premier compresseur à vitesse de rotation variable (2), un débit prédéterminé de ce gaz étant comprimé par au moins un deuxième compresseur (2A), à vitesse de rotation fixe, monté en parallèle avec le premier compresseur (2) ;
- on mesure au moins un paramètre représentatif du débit de gaz demandé par l'utilisateur; et
- on régule la vitesse de rotation du premier compresseur (2) en fonction de cette mesure.

Le procédé suviant l'invention peut en outre comporter une ou plusieurs des caractéristiques suivantes, prises séparément ou suviant toutes leurs combinaisons techniquement possibles :
- ladite partie du débit de gaz d'alimentation fournie par le premier compresseur couvre la totalité de la plage de variation de capacité de l'appareil de séparation;
- ledit paramètre est la pression et/ou le débit du gaz d'alimentation ou du gaz produit, et/ou la pureté du gaz produit;
- on régule le débit d'un gaz résiduaire de l'appareil de séparation ou le débit du gaz produit en fonction de la vitesse de rotation dudit compresseur ;

L'invention a également pour objet une installation destinée à la mise en oeuvre du procédé défini ci-dessus.

Cette installation, du type comprenant un appareil de séparation à capacité variable et un appareil de compression du gaz d'alimentation dont le refoulement est relié à l'entrée de cet appareil, est caractérisée en ce que :
- l'appareil de compression (2 ;2A) comprend, en parallèle, au moins un premier compresseur (2), à vitesse de rotation varaible, muni d'un variateur de vitesse (9), et au moins un deuxième compresseur (2A), à vitesse de rotation fixe ;
- et ce en ce qu'elle comprend des moyens (8) de mesure d'au moins un paramètre représentatif du débit de gaz demandé par l'utilisateur, reliés à des moyens (10) de pilotage du variateur de vitesse (9).

Des exemples d'installations adaptées à la mise en oeuvre de l'invention vont maintenant être décrits en regard des dessins annexés, sur lesquels :
- les figures 1 et 2 illustrent de façon schématique deux installations de production d'azote adaptables à l'invention;
- la figure 3 est un diagramme qui illustre les variations de la pression d'azote et de la puissance électrique consommée en fonction du débit d'air; et
- la figure 4 est une vue schématique analogue à la figure 1 illustrant l'invention.

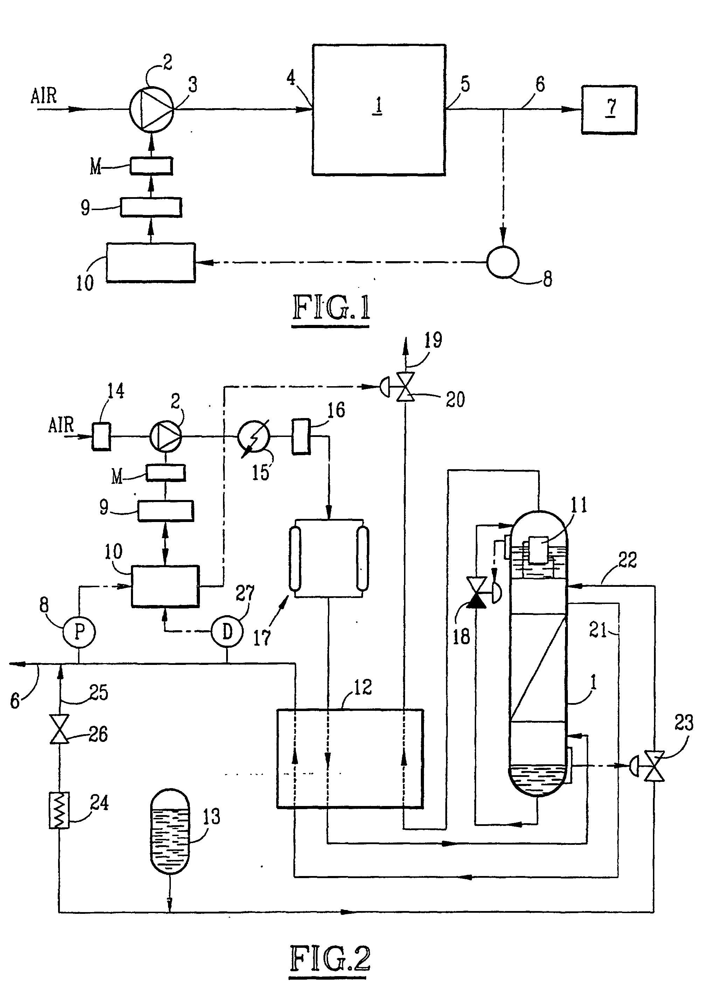

Dans le mode de réalisation schématisé sur la figure 1, l'installation comprend essentiellement un appareil de séparation d'air 1, du type à perméation par membrane ou à adsorption par variation de pression, alimenté par un premier compresseur d'air à vitesse variable 2. Ce dernier aspire de l'air atmosphérique, et son refoulement 3 est relié à l'entrée d'air 4 de l'appareil 1. La sortie 5 d'azote produit de cet appareil est relié, via une conduite d'utilisation 6 dépourvue de vanne, à un réseau utilisateur 7.

Selon un aspect de l'invention, l'installation comprend également un dispositif 8 de mesure d'au moins un paramètre représentatif de la demande en azote du réseau 7. Il s'agit par exemple d'un capteur de pression, d'un débitmètre et/ou d'un analyseur de gaz branché sur la conduite 6, comme représenté. Dans les deux premiers cas, du fait que la pression est sensiblement la même à l'entrée et à la sortie de l'appareil 1, tandis que le débit d'air est sensiblement proportionnel au débit d'azote, le dispositif de mesure 8 peut également être branché en amont sur la conduite qui relie le compresseur à l'appareil de séparation. Le dispositif 8 peut encore être un générateur de signal représentatif d'un débit de consigne demandé par l'utilisateur.

Le compresseur 2 est entraîné par un moteur électrique M à vitesse de rotation variable, lequel est commandé par un variateur de vitesse électronique 9. Ce variateur, constitué par un variateur de fréquence, est piloté par une unité de commande électronique 10, laquelle traite les informations fournies par le dispositif de mesure 8.

Lorsque le débit d'azote demandé diminue, le dispositif 8 détecte cette réduction de débit, ou bien une augmentation de la pression d'azote, ou encore une réduction de la pureté de l'azote. Le dispositif 8 envoie un signal correspondant à l'unité de commande 10, laquelle envoie au variateur 9 un signal de réduction de vitesse. Le débit d'air est ainsi réduit, avec une réduction correspondante de l'énergie consommée, et la pression de fonctionnement de l'appareil 1 est réduite.

Ainsi, les performances de l'appareil 1 et l'énergie spécifique ne sont que faiblement affectées par la marche réduite de l'installation.

L'installation de distillation d'air représentée sur la figure 2 fonctionne également suivant ce principe. Dans cet exemple, l'appareil 1 est une colonne de distillation d'air du type HPN (High Purity Nitrogen) ayant en tête un condenseur d'azote 11. Cette colonne est associée à une ligne d'échange thermique 12 et à un réservoir d'azote liquide 13. Son débit nominal d'azote est 750 Nm³/h sous 9 bars absolus.

L'air entrant, filtré en 14, est comprimé à la pression de distillation par le compresseur 2, refroidi au voisinage de la température ambiante en 15, de nouveau filtré en 16, et desséché - décarbonaté par adsorption en 17. L'air est ensuite refroidi au voisinage de son point de rosée dans la ligne d'échange 12 puis introduit en cuve de la colonne 1. Le "liquide riche" (air enrichi en oxygène) recueilli en cuve de la colonne est, après détente dans une vanne de détente 18, introduit dans la calandre du condenseur 11, où il se vaporise. Le niveau du liquide dans ce condenseur pilote la vanne de détente 18. Le liquide riche vaporisé constitue le gaz résiduaire de l'installation. Après réchauffement en 12, il est évacué via une conduite 19 équipée d'une vanne de régulation 20, après voir régénéré l'adsorbant en 17 (opération non représentée)

L'azote produit, soutiré en tête de la colonne 1 via une conduite 21, est réchauffé en 12 et envoyé à la conduite d'utilisation 6.

Le maintien en froid de l'installation est assurée par "biberonnage" d'azote liquide soutiré du réservoir 13 et introduit en tête de colonne via une conduite 22 munie d'une vanne de réglage 23. Cette dernière est pilotée de manière à maintenir constant le niveau de liquide en cuve de colonne. Si nécessaire, de l'azote liquide supplémentaire soutiré du réservoir 13 peut être vaporisé dans un vaporiseur auxiliaire 24 et ajouté dans la conduite 6, via une conduite 25 équipée d'une vanne 26.

Dans cet exemple, le dispositif de mesure 8 est un capteur de pression branché sur la conduite 6, en amont du débouché de la conduite 24.

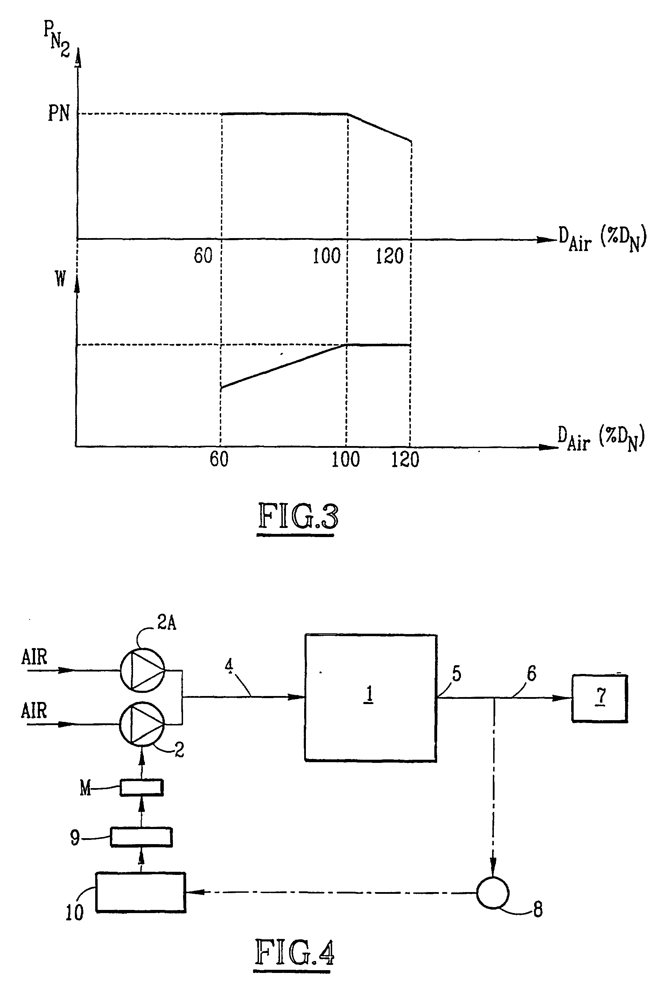

En fonctionnement à débit inférieur au débit nominal (figures 2 et 3), l'unité de commande calcule une consigne de vitesse de rotation du compresseur à vitesse variable 2 de façon à maintenir une pression d'azote sensiblement constante PN. La puissance consommée W est inférieure à la puissance nominale consommée par le moteur et le variateur du compresseur et croît progressivement avec le débit.

En fonctionnement à débit supérieur au débit nominal, au contraire, la consigne de vitesse est calculée de façon suivre une courbe vitesse/pression calculée de manière à maintenir sensiblement constante la puissance nominale du moteur et du variateur, tandis que la pression d'azote diminue progressivement lorsque le débit augmente.

On régule ainsi le débit d'air traité. De plus, pour maintenir les performances, notamment énergétiques, de l'appareil, on adapte de la manière suivante le débit d'azote produit: le taux d'extraction (rapport débit d'azote/débit d'air) est calculé par l'unité de commande 10 en fonction de la pression qui règne dans la colonne. Ce taux est voisin de 40% et augmente légèrement lorsque la pression baisse. On obtient ainsi un débit d'azote de consigne égal au débit d'air (représenté par la vitesse de rotation du compresseur) multiplié par le taux d'extraction. Le débit d'azote est mesuré en permanence par un débitmètre 27 relié à la conduite 6, et est comparé au débit de consigne par l'unité 10 pour commander la vanne 20 dans le sens qui annule l'écart. Ce mode de régulation pour les forts débits est très favorable, puisque la distillation est améliorée lorsque la pression est abaissée. Bien entendu, en variante, la vanne 20 peut être placée dans la conduite d'azote 6, avec un mode de régulation analogue.

Dans les descriptions des Figures 1 et 2 ci-dessus, le compresseur à vitesse variable 2 est supposé capable de fournir l'essentiel de la plage des débits d'air correspondants à la souplesse de la colonne 1, laquelle correspond généralement à un facteur voisin de 2, par exemple de 60% à 120% du débit nominal. Selon un aspect de l'invention, toutefois, schématisé sur la figure 4, et applicable aux deux exemples précédents, l'installation de compression comporte en outre au moins un compresseur additionnel 2A à vitesse de rotation fixe monté en parallèle avec le premier compresseur 2, à vitesse variable. Le compresseur 2A fournit en permanence le débit minimal d'air, soit typiquement 40% du débit nominal dans l'exemple précédent, et le compresseur à vitesse variable 2 fournit le reste du débit d'air, soit 0 à 80% du débit nominal. Ainsi, l'investissement global est réduit, ainsi que les pertes énergétiques dues au variateur, puisque ces pertes ne concernent qu'une fraction du débit.

A titre d'exemple, on peut prévoir un compresseur d'air à vitesse variable 2 à vis lubrifiée entraînée par un moteur électrique asynchrone à vitesse variable de 90 kW, ayant une pression de refoulement nominale de 11 bars absolus et un débit nominal de 650 Nm³ /h, et un compresseur d'air à vitesse fixe 2A à vis lubrifiée entraînée par un moteur électronique asynchrone de 90 kW à vitesse constante, ce moteur ayant une pression de refoulement nominale de 11 bars absolus et un débit nominal de 700 Nm³ /h.

L'invention peut être utilisée pour fournir une gamme d'installations ayant des capacités échelonnées, avec un appareil de séparation commun, un compresseur commun et des moyens pour entraîner ce dernier à des vitesses différentes pouvant être prédéterminées. Dans ce dernier cas, le variateur électronique qui commande le moteur du compresseur peut être remplacé par un agencement plus simple constitué par une gamme de transmissions à rapports différents, par exemple une gamme d'ensembles poulie-courroie interposés entre le moteur, qui tourne à une vitesse fixe, et le compresseur. On peut atteindre ainsi un degré élevé de standardisation, notamment pour les installations de petite taille, c'est-à-dire, dans le cas de la production d'azote par distillation d'air, produisant par exemple de 200 à 1500 Nm³/h environ.

## Revendications

1. Procédé de séparation d'un gaz d'alimentation comprimé, en vue de fournir à un utilisateur (7) un débit variable d'un gaz produit, au moyen d'un appareil de séparation (1) à capacité variable alimenté par un appareil de compression (2;2A), **caractérisé en ce que**:
- on ne comprime qu'une partie du débit de gaz d'alimentation au moyen d'au moins un premier compresseur à vitesse de rotation variable (2), un débit prédéterminé de ce gaz étant comprimé par au moins un deuxième compresseur (2A), à vitesse de rotation fixe, monté en parallèle avec le premier compresseur (2);
- on mesure au moins un paramètre représentatif du débit de gaz demandé par l'utilisateur; et
- on régule la vitesse de rotation du premier compresseur (2) en fonction de cette mesure.

2. Procédé suivant la revendication 1, **caractérisé en ce que** ladite partie du débit de gaz d'alimentation comprimée par le premier compresseur (2) couvre la majorité de la plage de variation de capacité de l'appareil de séparation (1).

3. Procédé suivant la revendication 1 ou la revendication 2, **caractérisé en ce que** ledit paramètre est la pression et/ou le débit du gaz d'alimentation ou du gaz produit, et/ou la pureté du gaz produit.

4. Procédé suivant l'une des revendications 1 à 3, **caractérisé en ce qu'**on régule (en 20) le débit d'un gaz résiduaire de l'appareil de séparation (1) ou le débit du gaz produit en fonction de la vitesse de rotation dudit compresseur (2).

5. Procédé suivant l'une des revendications précédentes, **caractérisé en ce que**, dans une plage inférieure de variation du débit de gaz d'alimentation, allant notamment de la capacité minimale de l'appareil de séparation (1) au débit nominal, on augmente la puissance (W) consommée par le premier compresseur (2) lorsque le débit augmente, tout en maintenant sensiblement constante la pression de refoulement de ce compresseur, tandis que, dans une plage supérieure de variation du débit de gaz d'alimentation, allant notamment du débit nominal à la capacité maximale de l'appareil de séparation (1), on maintient sensiblement constante la puissance (W) consommée par le premier compresseur (2) en diminuant la pression de refoulement de ce compresseur lorsque le débit augmente.

6. Procédé selon l'une des revendications 1 à 5, dans lequel le gaz d'alimentation est l'air et le gaz produit l'azote et/ou l'oxygène.

7. Procédé selon l'une des revendications 1 à 6, où la séparation du gaz d'alimentation s'effectue par perméation.

8. Procédé selon l'une des revendications 1 à 6, où la séparation du gaz d'alimentation s'effectue par distillation.

9. Installation de séparation d'un gaz d'alimentation comprimé, notamment d'air comprimé, en vue de fournir à un utilisateur (7) un débit variable d'un gaz produit, notamment d'azote, du type comprenant un appareil de séparation (1) à capacité variable et un appareil de compression (2;2A) du gaz d'alimentation dont le refoulement est relié à l'entrée de cet appareil, **caractérisée en ce que**:
- l'appareil de compression (2;2A) comprend, en parallèle, au moins un premier compresseur (2), à vitesse de rotation variable, muni d'un variateur de vitesse (9), et au moins un deuxième compresseur (2A), à vitesse de rotation fixe ;
- et **en ce qu'**elle comprend des moyens (8) de mesure d'au moins un paramètre représentatif du débit de gaz demandé par l'utilisateur, reliés à des moyens (10) de pilotage du variateur de vitesse (9).

10. Installation suivant la revendication 9, **caractérisée en ce que** le premier compresseur (2) est adapté pour couvrir une plage de débit de gaz d'alimentation qui recouvre la majorité de la plage de variation de capacité de l'appareil de séparation (1).

11. Installation suivant l'une des revendications 9 et 10, **caractérisée en ce que** lesdits moyens de mesure (8) comprennent un capteur de pression et/ou un débitmètre, branché sur le flux de gaz d'alimentation ou sur le flux de gaz produit, et/ou un analyseur de gaz branché sur le flux de gaz produit.

12. Installation suivant l'une des revendications 9 à 11, **caractérisée en ce qu'**elle comprend des moyens de calcul d'une vitesse de consigne du premier compresseur (2) de façon à maintenir sensiblement constante la pression ou la puissance consommée.

13. Installation suivant l'une des revendications 9 à 12, **caractérisée en ce qu'**elle comprend des moyens (20) de régulation du débit de gaz résiduaire de l'appareil de séparation (1) ou du débit du gaz produit, pilotés par ces moyens de calcul.

## Patentansprüche

1. Verfahren zur Trennung eines komprimierten Speisegases zur Belieferung eines Verbrauchers (7) mit einem variablen Durchfluss eines Produktgases mittels einer Trennvorrichtung (1) mit variabler Kapazität, die durch eine Kompressionsvorrichtung (2; 2A) gespeist wird, **dadurch gekennzeichnet, dass**:
- nur ein Teil des Speisegases mittels eines ersten Kompressors mit variabler Drehzahl (2) komprimiert wird, wobei ein vorbestimmter Durchfluss dieses Gases durch zumindest einen zweiten Kompressor (2A) mit fester Drehzahl komprimiert wird, der parallel zu dem ersten Kompressor (2) angeordnet ist,
- zumindest ein Parameter gemessen wird, der für den durch den Verbraucher geforderten Gasdurchfluss repräsentativ ist,
- die Drehzahl des ersten Kompressors (2) in Abhängigkeit von dieser Messung eingestellt wird.

2. Verfahren nach Anspruch 1, **dadurch gekennzeichnet, dass** der Teil des durch den ersten Kompressor (2) komprimierten Speisegases den Großteil der Kapazitätsvariationsspanne der Trennvorrichtung (1) abdeckt.

3. Verfahren nach Anspruch 1 oder Anspruch 2, **dadurch gekennzeichnet, dass** der Parameter der Druck und/oder der Durchfluss des Speisegases oder des Produktgases und/oder die Reinheit des Produktgases ist.

4. Verfahren nach einem der Ansprüche 1 bis 3, **dadurch gekennzeichnet, dass** (bei 20) der Durchfluss eines Restgases der Trennvorrichtung (1) oder der Durchfluss des Produktgases in Abhängigkeit von der Drehzahl des Kompressors (2) eingestellt wird.

5. Verfahren nach einem der vorhergehenden Ansprüche, **dadurch gekennzeichnet, dass** in eine unterer Variationsspanne des Speisegasdurchflusses, der insbesondere von der Minimalkapazität der Trennvorrichtung (1) bis zum Nenndurchfluss reicht, die durch den ersten Kompressor (2) verbrauchte Leistung (W) erhöht wird, wenn der Durchfluss zunimmt, wobei der Förderdruck dieses Kompressors im Wesentlichen konstant gehalten wird, während in der oberen Variationsspanne des Speisegasdurchflusses, der insbesondere vom Nenndurchfluss bis zur maximalen Kapazität der Trennvorrichtung (1) reicht, die durch den ersten Kompressor (2) verbrauchte Leistung (W) im Wesentlichen konstant gehalten wird, während der Förderdruck dieses Kompressors vermindert wird, wenn der Durchfluss zunimmt.

6. Verfahren nach einem der Ansprüche 1 bis 5, bei dem das Speisegas Luft ist und das Produktgas Stickstoff und/oder Sauerstoff.

7. Verfahren nach einem der Ansprüche 1 bis 6, wobei die Trennung des Speisegases durch Permeation erfolgt.

8. Verfahren nach einem der Ansprüche 1 bis 6, wobei die Trennung des Speisegases durch Destillation erfolgt.

9. Anlage zur Trennung eines komprimierten Speisegases, insbesondere Druckluft, zur Belieferung eines Verbrauchers (7) mit einem variablen Durchfluss eines Produktgases, insbesondere Stickstoff, der Art mit einer Trennvorrichtung (1) mit variabler Kapazität und einer Kompressionsvorrichtung (2; 2A), deren Ausstoß mit dem Eingang dieser Vorrichtung verbunden ist, **dadurch gekennzeichnet, dass**:
- die Kompressionsvorrichtung (2; 2A) parallel zumindest einen ersten Kompressor (2) mit variabler Drehzahl, der mit einem Drehzahlregler (9) versehen ist, und zumindest einen zweiten Kompressor (2A) mit fester Drehzahl umfasst,
- und dass sie Mittel (8) zur Messung zumindest eines Parameters umfasst, der für den durch den Verbraucher geforderten Gasdurchfluss repräsentativ ist, die mit Mitteln (10) zur Steuerung des Drehzahlreglers (9) verbunden sind.

10. Anlage nach Anspruch 9, **dadurch gekennzeichnet, dass** der erste Kompressor (2) dafür ausgelegt ist, eine Speisegasdurchflussspanne abzudecken, die den Großteil des Kapazitätsvariationsspanne der Trennvorrichtung (1) abdeckt.

11. Anlage nach einem der Ansprüche 9 und 10, **dadurch gekennzeichnet, dass** die Messmittel (8) einen Druckaufnehmer und/oder einen an den Speisegasstrom oder den Produktgasstrom angeschlossenen Durchflussmesser und/oder einen an den Produktgasstrom angeschlossenen Gasanalysator umfassen.

12. Anlage nach einem der Ansprüche 9 bis 11, **dadurch gekennzeichnet, dass** sie Mittel zur Berechnung einer Solldrehzahl des ersten Kompressors (2) umfasst, um den Druck oder die verbrauchte Leistung im Wesentlichen konstant zu halten.

13. Anlage nach einem der Ansprüche 9 bis 12, **dadurch gekennzeichnet, dass** sie Mittel (20) zur Regelung des Restgasdurchsatzes der Trennvorrichtung (1) oder des Produktgasdurchsatzes umfasst, die durch diese Rechenmittel angesteuert werden.

## Claims

1. Process for separating a compressed feed gas, for the purpose of delivering to a user (7) a variable output of a gas product, by means of a variable-capacity separation apparatus (1) fed by a compression apparatus (2; 2A), **characterized in that**:
- only a portion of the flow of feed gas is compressed by means of at least a first, variable-rotation-speed compressor (2), a predetermined flow of this gas being compressed by at least a second, fixed-rotation-speed compressor (2A) connected in parallel with the first compressor (2);
- at least one parameter representative of the gas output demanded by the user is measured; and
- the speed of rotation of the first compressor (2) is controlled according to this measurement.

2. Process according to Claim 1, **characterized in that** the said portion of the flow of feed gas compressed by the first compressor (2) covers most of the range of capacity variation of the separation apparatus (1).

3. Process according to Claim 1 or Claim 2, **characterized in that** the said parameter is the pressure and/or the flow rate of the feed gas or of the gas product, and/or the purity of the gas product.

4. Process according to one of Claims 1 to 3, **characterized in that** the output of a residual gas from the separation apparatus (1) or the output of the gas product is controlled (at 20) according to the speed of rotation of the said compressor (2).

5. Process according to one of the preceding claims, **characterized in that**, within a lower range of variation of the flow of feed gas, ranging especially from the minimum capacity of the separation apparatus (1) to the nominal output, the power (W) consumed by the first compressor (2) is increased when the output increases, while still keeping the delivery pressure of this compressor approximately constant, whereas, within an upper range of variation of the flow of feed gas, ranging especially from the nominal output to the maximum capacity of the separation apparatus (1), the power (W) consumed by the first compressor (2) is kept approximately constant by decreasing the delivery pressure of this compressor when the output increases.

6. Process according to one of Claims 1 to 5, in which the feed gas is air and the gas product is nitrogen and/or oxygen.

7. Process according to one of Claims 1 to 6, in which the separation of the feed gas takes place by permeation.

8. Process according to one of Claims 1 to 6, in which the separation of the feed gas takes place by distillation.

9. Plant for separating a compressed feed gas, especially compressed air, for the purpose of delivering to a user (7) a variable output of a gas product, especially nitrogen, of the type comprising a variable-capacity separation apparatus (1) and an apparatus (2; 2A) for compressing the feed gas, the delivery side of which is connected to the inlet of this apparatus, **characterized in that**:
- the compression apparatus (2; 2A) comprises, in parallel, at least a first, variable-rotation-speed compressor (2), provided with a variable-speed drive (9), and at least a second, fixed-rotation-speed compressor (2A);
- and **in that** it comprises means (8) for measuring at least one parameter representative of the gas output demanded by the user, which means are connected to means (10) for controlling the variable-speed drive (9).

10. Plant according to Claim 9, **characterized in that** the first compressor (2) is designed to cover a feed-gas flow-rate range which covers most of the range of capacity variation of the separation apparatus (1).

11. Plant according to either of Claims 9 and 10, **characterized in that** the said measurement means (8) comprise a pressure sensor and/or a flow meter, connected to the stream of feed gas or to the stream of gas product, and/or a gas analyzer connected to the stream of gas product.

12. Plant according to one of Claims 9 to 11, **characterized in that** it comprises means for computing a set speed for the first compressor (2) so as to keep the pressure or the power consumed approximately constant.

13. Plant according to one of Claims 9 to 12, **characterized in that** it comprises means (20) for regulating the output of residual gas from the separation apparatus (1) or the output of the gas product, which means are controlled by these computing means.
